# EUROPÄISCHE PATENTSCHRIFT

(11) **EP 4 363 241 B1**
(45) Veröffentlichungstag und Bekanntmachung des Hinweises auf die Patenterteilung: **17.09.2025**
(21) Anmeldenummer: 21824473.9
(22) Anmeldetag: 29.11.2021
(51) Int. Cl.: B60C 11/03, B60C 11/12

(54) **FAHRZEUGLUFTREIFEN**
PNEUMATIC VEHICLE TYRE
PNEUMATIQUE DE VÉHICULE

(30) Priorität: 29.06.2021 DE 102021206775
(43) Veröffentlichungstag der Anmeldung: 08.05.2024
(73) Patentinhaber: Continental Reifen Deutschland GmbH, 30175 Hannover (DE)
(72) Erfinder: ÖZÜDURU, Ahmet, 30165 Hannover (DE); SOYYUECE, Atakan, 30165 Hannover (DE)
(74) Vertreter: Continental Corporation
(86) Internationale Anmeldenummer: PCT/DE2021/200214
(87) Internationale Veröffentlichungsnummer: WO 2023/274434

(56) Entgegenhaltungen:
- EP-A1- 1 529 662
- EP-B1- 2 429 833
- EP-B1- 3 383 675
- WO-A1-2011/142273
- JP-A- 2020 100 193

## Beschreibung

Die Erfindung betrifft einen Fahrzeugluftreifen mit einem laufrichtungsgebunden ausgeführten Laufstreifen mit durch Rillen begrenzten Profilpositiven mit zur axialen Richtung unter einem Winkel von 5° bis 50° verlaufenden Einschnitten, welche jeweils eine Breite von 0,4 mm bis 2,0 mm, eine maximale Tiefe von zumindest 70% der Profiltiefe, ein beim Abrollen des Reifens bei Vorwärtsfahrt zuerst in den Untergrund eintretendes, laufstreifeninnenseitiges, einlaufendes Einschnittende und ein laufstreifenaußenseitiges, auslaufendes Einschnittende, eine beim Abrollen des Reifens bei Vorwärtsfahrt zuerst in den Untergrund eintretende, einlaufende Einschnittkante und eine auslaufende Einschnittkante sowie ferner zumindest einen in Draufsicht gewellt verlaufenden Einschnittabschnitt aufweisen, wobei sich der gewellt verlaufende Einschnittabschnitt aus jeweils über eine halbe Wellenlänge verlaufenden Einschnittunterabschnitten mit jeweils einer Amplitude zusammensetzt und wobei entweder die Amplituden übereinstimmen oder die größte(n) Amplitude(n) um bis zu 10% größer ist bzw. sind als die kleinste(n) Amplitude(n).

Ein derartiger Fahrzeugluftreifen ist beispielsweise aus der DE 10 2019 203 406 A1 bekannt. Der Reifen weist einen laufrichtungsgebunden ausgeführten Laufstreifen mit V-förmig zueinander verlaufenden Schrägrillen auf, wobei zwischen in Umfangsrichtung aufeinanderfolgenden Schrägrillen jeweils zumindest zwei weitere Rillen verlaufen und die Schrägrillen gemeinsam mit den weiteren Rillen in Draufsicht parallelogrammförmige mittlere Profilblöcke begrenzen. Die mittleren Profilblöcke sind mit Einschnitten mit einer Breite von 0,4 mm bis 0,8 mm sowie ferner mit seichteren Mikrorillen mit einer Breite von 0,1 mm bis 0,8 mm versehen, wobei die Einschnitte und Mikrorillen in Draufsicht parallel zu den Schrägrillen verlaufen. Beim beschriebenen Ausführungsbeispiel weisen die Einschnitte jeweils zwei in Draufsicht wellenförmig verlaufende Einschnittabschnitte auf und enden innerhalb der Profilblöcke. Der Reifen soll gute Brems- und Traktionseigenschaften auf eisigem und/oder schneebedecktem Untergrund aufweisen.

Aus der EP 2 429 833 B1 ist ein Fahrzeugluftreifen mit einem Laufstreifen mit Profilblöcken bekannt, welche mit Einschnitten versehen sind, die, im Querschnitt betrachtet, jeweils eine gewellte mittlere Einschnittzone aufweisen. Die mittlere Einschnittzone weist an der einen Einschnittwand ausgebildete erste und zweite Vorsprünge auf, welche an der anderen Einschnittwand ausgebildeten, korrelierend ausgeführten ersten und zweiten Vertiefungen gegenüberliegen. Die ersten Vorsprünge und die ersten Vertiefungen verlaufen parallel zur Laufstreifenperipherie. Die zweiten Vorsprünge und die zweiten Vertiefungen verlaufen in radialer Richtung und überlagern die ersten Vorsprünge bzw. die ersten Vertiefungen. Solche Eischnitte sollten beispielsweise für das Traktionsverhalten des Fahrzeugluftreifens günstig sein.

Die EP 1 529 662 A1 offenbart einen Fahrzeugluftreifen mit einem Laufstreifen mit Profilblöcken mit in Draufsicht im Wesentlichen in axialer Richtung verlaufenden, wellenförmigen Einschnitten, wobei die Amplitude der Einschnitte in einer der Erstreckungsrichtungen zunimmt.

Aus der EP 3 383 675 B1 ist ein Fahrzeugluftreifen mit einem laufrichtungsgebunden Laufstreifen mit Profilblöcken bekannt. Die Profilblöcke sind jeweils mit zumindest drei in Draufsicht parallel zueinander verlaufenden Einschnitten - zwei äußeren Einschnitten und zumindest einem inneren Einschnitt - versehen, wobei die Einschnitte jeweils einen in Draufsicht wellenförmig verlaufenden, mittleren Einschnittabschnitt aufweisen. Die Amplitude und die Wellenlänge des mittleren Einschnittabschnittes des inneren Einschnittes ist größer als die Amplitude und die Wellenlänge des mittleren Einschnittabschnittes der äußeren Einschnitte, wodurch das Abriebbild vergleichmäßigt sein soll.

Aus der WO 2011 142 273 A1 ist ein Fahrzeugluftreifen mit einem Laufstreifen mit Profilblöcken bekannt, welche mit Einschnitten versehen sind, wobei die Einschnitte, in Draufsicht betrachtet, eine geschwungene primäre Wellenform mit einer ersten Wellenlänge und "innerhalb" der primären Wellenform eine diese überlagernde, zick-zack-förmige sekundäre Wellenform mit einer gegenüber der ersten Wellenlänge deutlich kleiner ausgeführten zweiten Wellenlänge aufweisen. Der Reifen soll im Hinblick auf seine Winterperformance und seine Trockenhandlingeigenschaften gut ausbalanciert sein.

Die JP 2020 100 193 A offenbart einen Fahrzeugluftreifen mit einem Laufstreifen mit Profilblöcken, welche jeweils mit ersten Einschnitten und mit zweiten Einschnitten versehen sind. Die zweiten Einschnitte weisen eine sich in Draufsicht über den Einschnittverlauf verändernde Breite auf, welche dadurch bedingt ist, dass die Einschnitte in Draufsicht einen wellenförmig verlaufenden Einschnittabschnitt umfassen, in welchem die eine Einschnittwand phasenverschoben zur anderen Einschnittwand ausgeführt ist. Dieser Fahrzeugluftreifen soll im Hinblick auf die Blocksteifigkeit optimiert und derart ein gutes Ansprechverhalten auf Lenkkräfte sowie eine gute Traktionsperformance aufweisen.

In Profilpositiven von Laufstreifen ausgebildete Einschnitte sind in einer Vielzahl von Varianten bekannt und tragen durch ihre als Griffkanten wirkenden Einschnittkanten grundsätzlich zur Verbesserung der Griffeigenschaften, insbesondere auf mit Schnee und/oder Eis bedeckter Fahrbahn, bei. Einschnitte können einerseits in innerhalb der Profilpositive endende Einschnitte und in durchquerende Einschnitte eingeteilt werden. Endende Einschnitte verringern die Steifigkeit der Profilpositive günstiger Weise weniger als durchquerende Einschnitte. Durchquerende Einschnitte sind im Wasserdrainageverhalten überlegen. Anderseits können Einschnitte im Hinblick auf ihren Verlauf eingeteilt werden. In Draufsicht zumindest abschnittsweise gewellt verlaufende Einschnitte sind günstig für den Schneegriff, weil die Einschnittkanten durch den geschwungenen Verlauf länger als gerade Einschnittkanten sind und sich die durch die Einschnitte gebildeten Profilpositivsegmente unter Belastung gut gegeneinander abstützen können. In Draufsicht gerade oder durchgehend gebogen verlaufende Einschnitte weisen wiederum ein günstigeres Wasserdrainageverhalten auf.

Der Erfindung liegt die Aufgabe zugrunde, bei einem Fahrzeugluftreifen der eingangs genannten Art das Wasserdrainageverhalten im Bereich der Einschnitte unter Aufrechterhaltung möglichst vorteilhafter Auswirkungen auf die Griffeigenschaften weiter zu verbessern.

Gelöst wird die gestellte Aufgabe erfindungsgemäß dadurch, dass die Einschnitte die Profilpositive durchqueren, wobei der gewellt verlaufende Einschnittabschnitt in Draufsicht S-förmig gewellt verläuft und sich aus einem über eine erste halbe Wellenlänge verlaufenden, gegen die Abrollrichtung bei Vorwärtsfahrt weisenden, laufstreifeninnenseitigen Einschnittunterabschnitt und einem über einer zweite halbe Wellenlänge verlaufenden, in die Abrollrichtung bei Vorwärtsfahrt weisenden, laufstreifenaußenseitigen Einschnittunterabschnitt zusammensetzt, wobei die zweite Wellenlänge größer ist als die erste Wellenlänge.

Gemäß der Erfindung sind daher speziell auf die Abrollrichtung des Reifens abgestimmte durchquerende Einschnitte vorgesehen. Durch die S-förmig gewellten Einschnittabschnitte bleiben abschnittsweise für die Griffeigenschaften vorteilhaft geschwungene Griffkanten sowie die entsprechenden Abstützungseffekte zwischen den Profilpositivsegmenten erhalten. Ferner ist durch den S-förmig gewellten Einschnittabschnitt - im Vergleich zu einem "vielfach" gewellten Einschnittabschnitt - der Drainageweg zur nächstliegenden Rille verringert. Der gegen die Abrollrichtung weisende, sich näher zum einlaufenden Einschnittende befindliche, laufstreifeninnenseitige Einschnittunterabschnitt mit der kleineren Wellenlänge ist vor allem für die Abstützungseffekte vorteilhaft. Im in die Abrollrichtung weisenden, sich näher zum auslaufenden Einschnittende befindlichen, laufstreifenaußenseitigen Einschnittunterabschnitt mit der größeren Wellenlänge wird - im Vergleich zum laufstreifeninnenseitigen Einschnittunterabschnitt - Wasser etwas schneller durchgeleitet, sodass in diesem Einschnittunterabschnitt eine vorteilhafte Beschleunigung des Wasserflusses in Richtung zum auslaufenden Einschnittende erfolgt. Wasser wird daher auf vorteilhaft beschleunigte Weise aus dem S-förmig gewellten Einschnittabschnitt herausgeleitet, wodurch die Wasserdrainage in den Einschnitten insgesamt verbessert ist.

Gemäß einer bevorzugten Ausführung beträgt die zum laufstreifenaußenseitigen Einschnittunterabschnitt gehörende zweite Wellenlänge 110% bis 140%, insbesondere 115% bis 125%, der zum laufstreifeninnenseitigen Einschnittunterabschnitt gehörenden ersten Wellenlänge. Die Abstimmung der Wellenlängen trägt zu einer weiteren Verbesserung der erläuterten Wirkungsweise der Einschnittunterabschnitte bei.

In diesem Zusammenhang ist es ferner günstig, wenn die zum laufstreifeninnenseitigen Einschnittunterabschnitt gehörende erste halbe Wellenlänge eine Größe von 4,0 mm bis 10,0 mm, bevorzugt von 6,0 mm bis 8,0 mm, aufweist.

Im Hinblick auf die Amplitude der Einschnittunterabschnitte ist eine größere Amplitude für die erwähnten Abstützungseffekte und die Wirkung der Einschnittkanten als Griffkanten günstig, eine kleinere Amplitude verringert allerdings die Länge des Drainageweges. Eine bevorzugte Ausführung, welche in dieser Hinsicht einen vorteilhaften Kompromiss liefert, ist dadurch gekennzeichnet, dass der laufstreifeninnenseitige Einschnittunterabschnitt und der laufstreifenaußenseitige Einschnittunterabschnitt jeweils eine Amplitude von 100% bis 300%, insbesondere von bis zu 200%, bevorzugt von 125% bis 175%, besonders bevorzugt von 140% bis 160%, der Breite des Einschnittes aufweisen.

Gemäß einer weiteren bevorzugten Ausführung weist der in Draufsicht S-förmig gewellt verlaufende Einschnittabschnitt - in Draufsicht betrachtet und bezogen auf die in Erstreckungsrichtung ausgerichtete Einschnittmittellinie - eine an der Laufstreifenperipherie ermittelte, in die axiale Richtung projizierte Länge von 20% bis 30%, insbesondere von 24% bis 28%, der auf analoge Weise ermittelten Länge des Einschnittes auf.

Eine weitere bevorzugte Ausführung ist dadurch gekennzeichnet, dass der in Draufsicht S-förmig gewellt verlaufende Einschnittabschnitt, im in Draufsicht senkrecht zur Einschnittmittellinie ausgerichtete Querschnitt betrachtet, einen radial äußeren Einschnittbereich aufweist, in welchem die S-Form fortgeführt ist und welcher in radialer Richtung bis in eine Tiefe von 35% bis 60%, insbesondere von 45% bis 50%, der maximalen Tiefe des Einschnittes reicht. Ein derart ausgeführter Einschnittbereich ist für die beschriebene Wirkungsweise des in Draufsicht S-förmig gewellt verlaufenden Einschnittabschnittes besonders vorteilhaft.

Gemäß einer weiteren bevorzugten Ausführung sind Einschnitte vorgesehen, welche jeweils zumindest zwei, insbesondere genau zwei, in Draufsicht S-förmig gewellt verlaufende Einschnittabschnitte aufweisen, wobei die in Draufsicht S-förmig gewellt verlaufenden Einschnittabschnitte vorzugsweise nicht unmittelbar aneinander anschließen. Diese Maßnahme trägt zu einer Verbesserung der Griffeigenschaften bei.

Bei der letztgenannten Ausführung ist es ferner vorteilhaft, wenn die Einschnitte jeweils eine in Draufsicht senkrecht zur Einschnittmittellinie ausgerichtete, bezogen auf die Längserstreckung durch die Mitte des jeweiligen Einschnittes verlaufende Querschnittmittelebene aufweisen, bezüglicher welcher die Einschnitte schubsymmetrisch ausgebildet sind. Dies ermöglicht einen besonders gleichmäßigen, für die Griffeigenschaften vorteilhaften Abstützungseffekt.

Eine weitere bevorzugten Ausführung ist dadurch gekennzeichnet, dass der bzw. jeder in Draufsicht S-förmig gewellt verlaufende Einschnittabschnitt eines Einschnittes, im in radialer Richtung ausgerichteten und senkrecht zur Einschnittmittellinie verlaufenden Querschnitt betrachtet, eine sich über den Großteil jedes Einschnittunterabschnittes erstreckende, ausgelenkte mittlere Einschnittzone aufweist, welche, im in Draufsicht senkrecht zu einer mittig durch den S-förmig gewellt verlaufenden Einschnittabschnitt verlaufenden Wellenverlauflinie ausgerichteten Querschnitt betrachtet, bogenförmig verläuft. Die ausgelenkte mittlere Einschnittzone stabilisiert die durch die Einschnitte gebildeten Profilpositivsegmente zusätzlich gegeneinander, was ebenfalls für die Griffeigenschaften günstig ist.

Bei der zuvor genannten bevorzugten Ausführung ist es bevorzugt, wenn die Einschnitte von den Einschnittkanten ausgehende Einschnittwände aufweisen, wobei die ausgelenkte mittlere Einschnittzone durch einen an der von der einlaufenden Einschnittkante ausgehenden Einschnittwand ausgebildeten Vorsprung und einer in der von der auslaufenden Einschnittkante ausgehenden Einschnittwand ausgebildeten Einbuchtung gebildet ist. Diese Ausgestaltung verbessert die Öffnungsfähigkeit der Einschnitte, was insbesondere für die Traktionseigenschaften auf Schnee von Vorteil ist.

Bei der zuvor genannten bevorzugten Ausführung besteht eine vorteilhafte Ausführungsvariante darin, dass die ausgelenkte mittlere Einschnittzone eine Symmetrieebene aufweist, welche, im in radialer Richtung ausgerichteten Querschnitt senkrecht zur Einschnittmittellinie betrachtet, eine von der Einschnittmittellinie ausgehende Einschnittmittelebene senkrecht in einer in radialer Richtung ermittelten Tiefe von 50% bis 70%, insbesondere 55% bis 65%, der maximalen Tiefe des Einschnittes schneidet. Dies verbessert die Öffnungsfähigkeit der Einschnitte zusätzlich.

Bei der erwähnten vorteilhaften Ausführungsvariante ist es von zusätzlich Vorteil, wenn die ausgelenkte mittlere Einschnittzone in der Symmetrieebene eine Zonenmittellinie aufweist, welche am gegenseitigen Anschluss der Einschnittunterabschnitte gegenüber und senkrecht zu einer Bezugs-Wellenverlauflinie, die sich durch Projektion der Wellenverlauflinie im Bereich außerhalb der ausgelenkten mittleren Einschnittzone in die Symmetrieebene ergibt, eine maximale Auslenkung von 150% bis 200%, insbesondere von 160% bis 190%, der Breite des Einschnittes aufweist, wobei die in der Symmetrieebene gegenüber der und senkrecht zur Bezugs-Wellenverlauflinie ermittelte Auslenkung der Zonenmittellinie von der Stelle der maximale Auslenkung zu den Schnittpunkten der Zonenmittellinie mit der Bezugs-Wellenverlauflinie abnimmt. Dies ist insbesondere für das Drainageverhalten im Bereich der Einschnittzone günstig.

Ferner ist es in diesem Zusammenhang günstig, wenn die Zonenmittellinie an der Stelle der Amplitude des laufstreifeninnenseitigen Einschnittunterabschnittes und an der Stelle der Amplitude des laufstreifenaußenseitigen Einschnittunterabschnittes jeweils eine gegenüber der und senkrecht zur Bezugs-Wellenverlauflinie ermittelte Auslenkung aufweist, welche 50% bis 100%, insbesondere 60% bis 70%, der maximalen Auslenkung beträgt.

Bevorzugter Weise beträgt die Auslenkung der Zonenmittellinie im laufstreifeninnenseitigen Einschnittunterabschnitt 90% bis 110% der Auslenkung der Zonenmittellinie im laufstreifenaußenseitigen Einschnittunterabschnitt.

Gemäß einer weiteren bevorzugten Ausführungsvariante weist die ausgelenkte mittlere Einschnittzone, im Querschnitt senkrecht zur Wellenverlauflinie betrachtet, eine auf die von der Einschnittmittellinie ausgehende Einschnittmittelebene bezogene und parallel zu dieser ermittelte Erstreckungslänge von 2,0 mm bis 5,0 mm, insbesondere von 2,5 mm bis 3,5 mm, auf.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf einen Umfangsabschnitt eines Laufstreifens eines Fahrzeugluftreifens mit einer Ausführungsvariante der Erfindung,
Fig. 2 eine vergrößerte Draufsicht auf das Detail Z₂ in Fig. 1,
Fig. 3 einen Schnitt entlang der Linie III-III in Fig. 2,
Fig. 4 einen Schnitt entlang der Linie IV-IV in Fig. 2,
Fig. 5 eine Visualisierung eines Einschnittes und
Fig. 6 eine vergrößerte Darstellung des Details Z₆ der Fig. 2.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks (Leichte LKWs mit zGM ≤ 7,5 t).

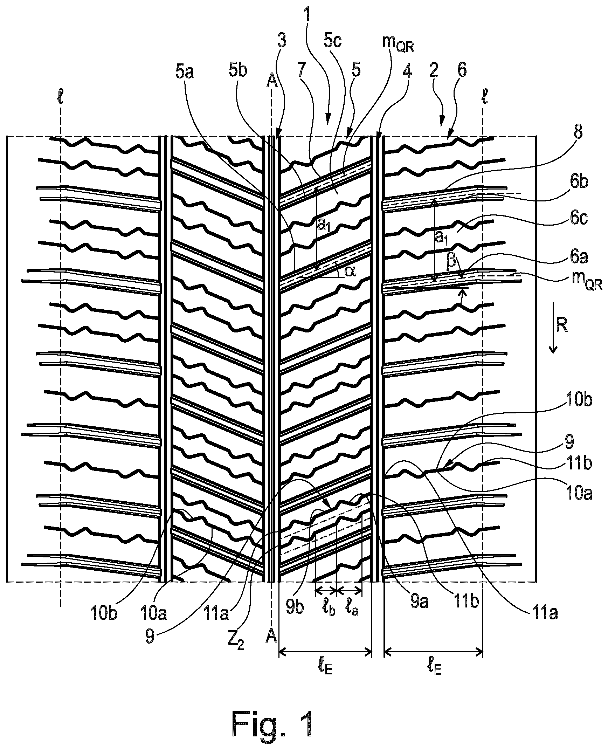

Fig. 1 zeigt eine Draufsicht auf eine Teilabwicklung eines zu einem Fahrzeugluftreifen gehörenden Laufstreifens mit einer laufrichtungsgebunden ausgeführten Profilierung, wobei der Fahrzeugluftreifen derart an einem Fahrzeug zu montieren ist, dass er die durch den Pfeil R angedeutete Abrollrichtung bei Vorwärtsfahrt aufweist. Die seitlichen Ränder der Bodenaufstandsfläche (entspricht dem statisch ermittelten Footprint bei einer Last von 70 % der maximalen Tragfähigkeit bei einem Innendruck von 85 %, ermittelt gemäß E.T.R.T.O.-Standards) sind durch Linien I und die Reifenäquatorialebene ist durch eine Linie A-A gekennzeichnet. Der Laufstreifen ist beim gezeigten Ausführungsbeispiel bezüglich der Reifenäquatorialebene symmetrisch ausgeführt.

Der Laufstreifen weist in jeder Laufstreifenhälfte eine in Umfangsrichtung umlaufende mittlere Profilblockreihe 1 und eine in der entsprechenden Reifenschulter verlaufende schulterseitige Profilblockreihe 2 auf, wobei die mittleren Profilblockreihen 1 durch eine in Draufsicht gerade sowie entlang der Reifenäquatorialebene verlaufende, zentrale Umfangsrille 3 und die schulterseitigen Profilblockreihen 2 zur jeweils benachbarten mittleren Profilblockreihen 1 durch eine Draufsicht gerade verlaufende, schulterseitige Umfangsrille 4 getrennt sind. Die Umfangsrillen 3, 4 sind in radialer Richtung in der jeweils vorgesehenen Profiltiefe ausgeführt, welche für den bevorzugten Reifentyp üblicherweise 6,5 mm bis 11,0 mm beträgt. Der Ausdruck "Profiltiefe" bezeichnet, bei Laufstreifen mit verschieden tief ausgeführten Haupt(entwässerungs)rillen die Tiefe der am tiefsten ausgeführten Haupt(entwässerungs)rille(n).

Die Profilblockreihen 1, 2 weisen jeweils eine Vielzahl von mittleren Profilblöcken 5 (mittlere Profilblockreihen 1) bzw. von schulterseitigen Profilblöcken 6 (schulterseitige Profilblockreihen 2) auf, welche durch innerhalb der jeweiligen Profilblockreihe 1, 2 in Draufsicht parallel zueinander verlaufende mittlere Querrillen 7 (mittlere Profilblockreihen 1) bzw. schulterseitige Querrillen 8 (schulterseitige Profilblockreihen 2) voneinander getrennt sind, wobei die Querrillen 7, 8 in die Umfangsrillen 3, 4 bzw. die entsprechende schulterseitige Umfangsrille 4 einmünden.

Die Querrillen 7, 8 weisen an der Laufstreifenperipherie eine senkrecht zu ihrer Erstreckungsrichtung ermittelte Breite von 3,0 mm bis 8,0 mm und in radialer Richtung eine maximale Tiefe (Tiefe an der jeweils tiefsten Stelle) von 70% bis 100%, insbesondere von höchstens 95%, der Profiltiefe auf. In Umfangsrichtung unmittelbar aufeinanderfolgende Querrillen 7 bzw. 8 sind - bezogen auf die Rillenmittlinien m_{QR} - unter in Umfangsrichtung ermittelten gegenseitigen Abstände a₁ von vorzugsweise 15,0 mm bis 45,0 mm ausgebildet. Die mittleren Querrillen 7 verlaufen, in Draufsicht betrachtet, gerade sowie zur axialen Richtung unter einem Winkel α von 5° bis 30°, insbesondere von 15° bis 25°. Die schulterseitigen Querrillen 8 verlaufen über den jeweiligen seitlichen Rand der Bodenaufstandsfläche hinaus (Linie I) sowie, in Draufsicht betrachtet, innerhalb der Bodenaufstandsfläche gerade sowie zur axialen Richtung unter einem Winkel β von 1° bis 10°, insbesondere von bis zu 5°. Die Neigung der Querrillen 7, 8 ist derart, dass beim Abrollen des Reifens bei Vorwärtsfahrt (Pfeil R) die laufstreifeninnenseitigen Rillenenden der Querrillen 7, 8 jeweils vor dem zugehörigen laufstreifenaußenseitigen Rillenende in den Untergrund eintreten.

Jeder Profilblock 5, 6 weist an der Laufstreifenperipherie eine an der einen angrenzenden Querrille 7 bzw. 8 ausgebildete einlaufende Blockkante 5a (Profilblock 5), 6a (Profilblock 6), eine an der anderen angrenzenden Querrille 7 bzw. 8 ausgebildete auslaufende Blockkante 5b (Profilblock 5), 6b (Profilblock 6) und eine in der Laufstreifenperipherie liegende Blockaußenfläche 5c (Profilblock 5), 6c (Profilblock 6) auf. Beim Abrollen des Reifens bei Vorwärtsfahrt tritt die einlaufende Blockkante 5a, 6a vor der auslaufenden Blockkante 5b, 6b in den Untergrund ein.

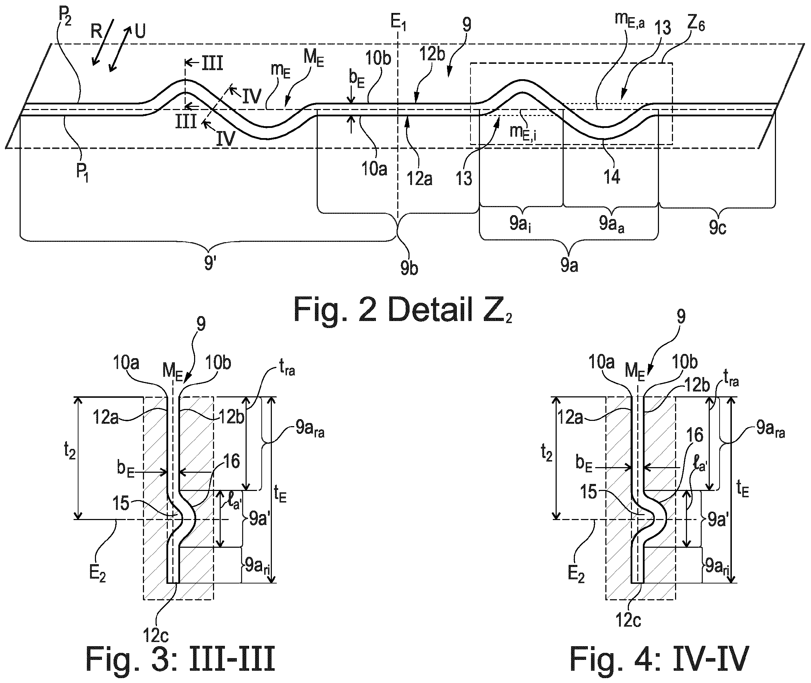

Die mittleren Profilblöcke 5 sind jeweils mit zwei Einschnitten 9 und die schulterseitigen Profilblöcke 6 sind jeweils mit einem einzigen Einschnitt 9 oder ebenfalls jeweils mit zwei Einschnitten 9 versehen. Die Einschnitte 9 weisen jeweils eine in Draufsicht in Erstreckungsrichtung ausgerichtete, gerade verlaufende Einschnittmittellinie m_{E} (Fig. 2) auf, verlaufen - in Draufsicht betrachtet und bezogen auf ihre Einschnittmittellinien m_{E} - parallel zu den Blockkanten 5a, 5b bzw. 6a, 6b und durchqueren die Profilblöcke 5 bzw. 6. Unter in schulterseitigen Profilblöcken 6 verlaufenden, durchquerenden Einschnitten 9 werden solche verstanden, die die schulterseitigen Profilblöcke 6 zumindest im Bereich innerhalb der Bodenaufstandsfläche durchqueren, daher zumindest bis zum jeweiligen seitlichen Rand der Bodenaufstandsfläche (Linie I) reichen, wobei - wie auch Fig. 1 zeigt - die durchquerenden Einschnitte 9 in den schulterseitigen Profilblöcken 6 vorzugsweise über den seitlichen Rand der Bodenaufstandsfläche (Linie I) hinausverlaufen.

Wie Fig. 1 und Fig. 2 zeigen, weist jeder Einschnitt 9 an der Blockaußenfläche 5c bzw. 6c jeweils eine beim Abrollen des Reifens bei Vorwärtsfahrt (Fig. 1: Pfeil R) zuerst in den Untergrund eintretende, einlaufende Einschnittkante 10a und eine auslaufende Einschnittkante 10b sowie ein beim Abrollen des Reifens bei Vorwärtsfahrt zuerst in den Untergrund eintretendes laufstreifeninnenseitiges, einlaufendes Einschnittende 11a (Fig. 1) und ein laufstreifenaußenseitiges, auslaufendes Einschnittende 11b (Fig. 1) auf, wobei das auslaufende Einschnittende 11b bei Einschnitten 9 in schulterseitigen Profilblöcken 6 an den jeweiligen seitlichen Rand der Bodenaufstandsfläche (Linie I) angrenzt (Fig. 1).

In Fig. 2 sind ferner die Abrollrichtung bei Vorwärtsfahrt durch einen Pfeil R und die Umfangsrichtung durch einen Doppelpfeil U angedeutet. Beim Abrollen des Reifens bei Vorwärtsfahrt treten auf der einlaufenden Einschnittkante 10a liegende Punkte P₁ jeweils vor dem exakt in Umfangsrichtung gegenüberliegenden, auf der auslaufenden Einschnittkante 10b liegenden Punkt P₂ in den Untergrund ein. In Fig. 2 sind zwei solcher Punkte P₁, P₂ exemplarisch eingezeichnet.

Die weitere Ausgestaltung der Einschnitte 9 wird nachfolgend anhand eines in einem mittleren Profilblock 5 ausgebildeten Einschnittes 9 weiter erläutert.

Wie Fig. 2 bis Fig. 4 in Kombination zeigen, ist der Einschnitt 9 durch eine von der einlaufenden Einschnittkante 10a ausgehende Einschnittwand 12a, eine von der auslaufenden Einschnittkante 10b ausgehende Einschnittwand 12b sowie einen Einschnittgrund 12c (Fig. 3, Fig. 4) begrenzt. Der Einschnitt 9 weist eine an der Laufstreifenperipherie ermittelte, in die axiale Richtung projizierte Länge I_{E} (Fig. 1, bei Einschnitten 9 in schulterseitigen Profilblöcken 6 innerhalb der Bodenaufstandsfläche ermittelt), eine zwischen sowie senkrecht zu den Einschnittwänden 12a, 12b ermittelte, konstante Breite b_{E} von 0,4 mm bis 2,0 mm, insbesondere von bis zu 1,2 mm, besonders bevorzugt von bis zu 0,8 mm, sowie eine in radialer Richtung ermittelte maximale Tiefe t_{E} (Tiefe an der jeweils tiefsten Stelle, Fig. 3, Fig. 4) von 70% bis 100%, insbesondere von höchstens 95%, der Profiltiefe auf.

Gemäß Fig. 2 weist der Einschnitt 9 eine in Draufsicht senkrecht zur Einschnittmittellinie m_{E} ausgerichtete, in radialer Richtung sowie bezogen auf die Längserstreckung durch die Mitte des Einschnittes 9 verlaufende Querschnittmittelebene E₁ auf, bezüglich welcher der Einschnitt 9 schubsymmetrisch (schiebsymmetrisch, translationssymmetrisch) ausgebildet ist. Die Querschnittmittelebene E₁ teilt den Einschnitt 9 in Draufsicht daher in zwei Einschnitthälften 9', wobei die Einschnitthälften 9' durch Verschiebung entlang der Einschnittmittellinie m_{E} ineinander überführbar sind.

Der Einschnitt 9 setzt sich, in Draufsicht betrachtet (und bezogen auf einen neuen Reifen), aus zwei übereinstimmend ausgeführten, jeweils S-förmig gewellt verlaufenden Einschnittabschnitten 9a, einem zwischen diesen sowie in Draufsicht gerade verlaufenden, von der Querschnittmittelebene E₁ halbierten, zentralen Einschnittabschnitt 9b und zwei in Draufsicht gerade sowie fluchtend mit dem zentralen Einschnittabschnitt 9b verlaufenden, randseitigen Einschnittabschnitten 9c zusammen. Der Einschnitt 9 weist ferner eine von der Einschnittmittellinie m_{E} ausgehende Einschnittmittelebene M_{E} auf, welche mittig durch den zentralen Einschnittabschnitt 9b sowie mittig durch die randseitigen Einschnittabschnitte 9c sowie beim Ausführungsbeispiel ferner in radialer Richtung verläuft (Fig. 3, Fig. 4), alternativ zur radialen Richtung unter einem Winkel von insbesondere bis zu ± 2° verläuft.

Gemäß Fig. 1 weist jeder S-förmig gewellt verlaufende Einschnittabschnitt 9a - in Draufsicht betrachtet und bezogen auf die Einschnittmittellinie m_{E} (Fig. 2) - eine an der Laufstreifenperipherie ermittelte, in die axiale Richtung projizierte Länge Iₐ und der zentrale Einschnittabschnitt 9b weist - in Draufsicht betrachtet und bezogen auf die Einschnittmittellinie m_{E} - eine an der Laufstreifenperipherie ermittelte, in die axiale Richtung projizierte Länge I_{b} auf, wobei die Längen Iₐ, I_{b} jeweils vorzugsweise 20% bis 30%, insbesondere 24% bis 28%, der in die axiale Richtung projizierten Länge I_{E} des Einschnittes 9 betragen.

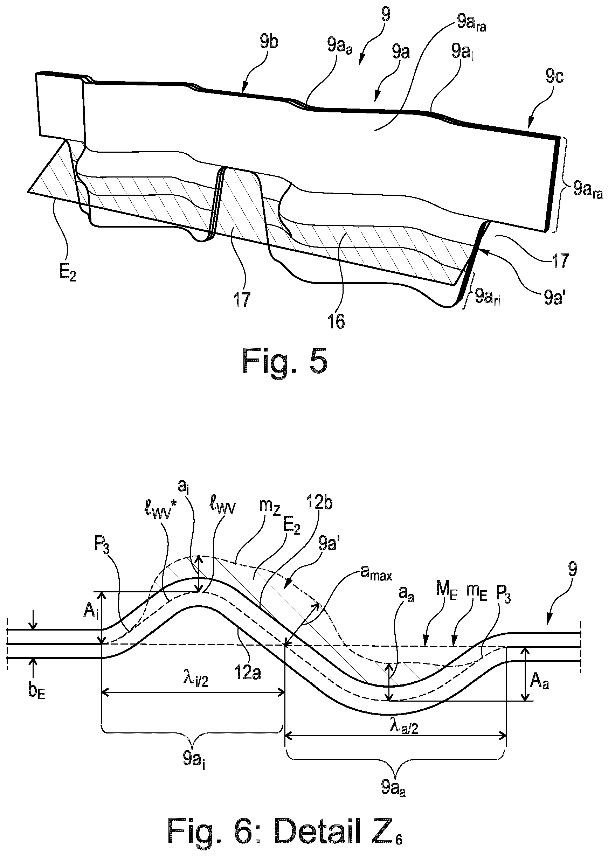

Gemäß Fig. 3 bis Fig. 5 reicht jeder S-förmig gewellt verlaufende Einschnittabschnitt 9a auf die erwähnte maximale Tiefe t_{E} (Fig. 3, Fig. 4) und setzt sich, im in radialer Richtung ausgerichteten und senkrecht zur Einschnittmittellinie m_{E} verlaufenden Querschnitt betrachtet, jeweils aus einem radial äußeren Einschnittbereich 9aᵣₐ, einer speziell ausgeführten, ausgelenkten mittleren Einschnittzone 9a', auf deren Ausgestaltung später noch genauer eingegangen wird, und einem radial inneren Einschnittbereich 9aᵣᵢ zusammen. Die Einschnittabschnitte 9a verlaufen im radial äußeren Einschnittbereich 9aᵣₐ und im radial inneren Einschnittbereich 9aᵣᵢ in einer gleichbleibenden S-Form (Fig. 5) und sind - wie Fig. 2 zeigt - von der Einschnittmittelebene M_{E} jeweils in einen in Draufsicht bogenförmig verlaufenden, laufstreifeninnenseitigen Einschnittunterabschnitt 9aᵢ und einen in Draufsicht bogenförmig verlaufenden, laufstreifenaußenseitigen Einschnittunterabschnitt 9aₐ halbiert, setzen sich in den Einschnittbereichen 9aᵣₐ, 9aᵣᵢ daher jeweils aus den Einschnittunterabschnitten 9aᵢ, 9aₐ zusammen. Der radial äußere Einschnittbereiche 9aᵣₐ reicht in radialer Richtung bis in eine Tiefe tᵣₐ (Fig. 3, Fig. 4) von 35% bis 60%, insbesondere von 45% bis 50%, der maximalen Tiefe t_{E}.

Wie Fig. 2 in Verbindung mit Fig. 1 zeigt, weist der laufstreifeninnenseitige Einschnittunterabschnitt 9aᵢ (Fig. 2) in Richtung der jeweiligen auslaufenden Blockkante 5b, 6b (Fig. 1) und der laufstreifenaußenseitige Einschnittunterabschnitt 9aₐ (Fig. 2) weist in Richtung der jeweiligen einlaufenden Blockkante 5a, 6a (Fig. 1). Der laufstreifeninnenseitige Einschnittunterabschnitt 9aᵢ weist daher - bezogen auf einen sich über den Einschnittunterabschnitt 9aᵢ erstreckenden Einschnittmittellinienabschnitt m_{E,i} (Fig. 2) - gegen die Abrollrichtung (Pfeil R) und der laufstreifenaußenseitige Einschnittunterabschnitt 9aₐ weist daher - bezogen auf einen sich über den Einschnittunterabschnitt 9aₐ erstreckenden Einschnittmittellinienabschnitt m_{E,a} - in die Abrollrichtung (vergl. Fig. 1, Pfeil R). Gemäß Fig. 2 bedingt jeder Einschnittunterabschnitt 9aᵢ, 9aₐ einen an der einen Einschnittwand 12a, 12b ausgebildeten, gegenüber den ebenen Wandbereichen dieser Einschnittwand 12a, 12b vorspringenden Vorsprung 13 (Basis der Vorsprünge 13 im Bereich des Details Z₆ punktiert angedeutet) und eine an der jeweils anderen Einschnittwand 12a, 12b ausgebildete, gegenüber den ebenen Wandbereichen dieser Einschnittwand 12, 12b eingebuchtete Vertiefung 14 , welche mit dem Vorsprung 13 korrespondiert und in welche der Vorsprung 13 hineinragt. Entsprechend der beschriebenen Orientierung der Einschnittunterabschnitte 9aₐ, 9aᵢ befindet sich der Vorsprung 13 im laufstreifenaußenseitigen Einschnittunterabschnitt 9aₐ an der von der auslaufenden Einschnittkante 10b ausgehenden Einschnittwand 12b und der Vorsprung 13 im laufstreifeninnenseitigen Einschnittunterabschnitt 9aᵢ an der von der einlaufenden Einschnittkante 10a ausgehenden Einschnittwand 12a.

Gemäß Fig. 6 verläuft der laufstreifeninnenseitige Einschnittunterabschnitt 9aᵢ in den Einschnittbereichen 9aᵣₐ, 9aᵣᵢ (vergl. Fig. 5) in Draufsicht über eine halbe Wellenlänge λᵢ/2 und weist eine Amplitude Aᵢ auf, der laufstreifenaußenseitige Einschnittunterabschnitt 9aₐ verläuft in den Einschnittbereichen 9aᵣₐ, 9aᵣᵢ in Draufsicht über eine halbe Wellenlänge λₐ/2 und weist eine Amplitude Aₐ auf. Die Wellenlängen λᵢ, λₐ und die Amplituden Aᵢ, Aₐ beziehen sich jeweils auf eine in Draufsicht mittig den S-förmigen Wellenverlauf folgende Wellenverlauflinie I_{WV} (strichliert eingezeichnet), wobei die Amplituden Aᵢ, Aₐ in bekannter Weise relativ zur Einschnittmittellinie m_{E} bzw. relativ zur Einschnittmittelebene M_{E} ermittelt sind. Die Wellenlänge λₐ ist größer als die Wellenlänge λᵢ, wobei die Wellenlänge λₐ 110% bis 140%, insbesondere 115% bis 125%, der Wellenlänge λᵢ beträgt. Die Größe der halben Wellenlänge λᵢ/2 beträgt 4,0 mm bis 10,0 mm, bevorzugt 6,0 mm bis 8,0 mm. Die Amplituden Aᵢ, Aₐ betragen jeweils 100% bis 300%, insbesondere bis zu 200%, bevorzugt 125% bis 175%, besonders bevorzugt 140% bis 160%, der Breite b_{E} des Einschnittes 9. Beim gezeigten Ausführungsbeispiel stimmen die Amplituden Aᵢ, Aₐ überein. Alternativ ist die jeweils größere der beiden Amplitude Aᵢ, Aₐ höchstens um 10% größer als die kleinere der beiden Amplituden Aᵢ, Aₐ.

Wie Fig. 3 und Fig. 4 in Kombination mit Fig. 5 zeigen, weisen die bereits erwähnten mittleren Einschnittzonen 9a' der in Draufsicht S-förmig gewellt verlaufenden Einschnittabschnitte 9a eine gemeinsame Symmetrieebene E₂ auf, welche senkrecht zur Einschnittmittelebene M_{E} (Fig. 3, Fig. 4) verläuft und diese in einer in radialer Richtung ermittelten konstanten Tiefe t₂ (Fig.3, Fig. 4) von 50% bis 70%, insbesondere von 55% bis 65%, der maximalen Tiefe t_{E} (Fig. 3, Fig. 4) des Einschnittes 9 schneidet. Im Hinblick auf die Symmetrieebene E₂ bleibt die Reifenkrümmung, also die Krümmung der Reifenkontur unberücksichtigt. Gemäß Fig. 3 und Fig. 4 verläuft jede Einschnittzone 9a', im in Draufsicht senkrecht zur Wellenverlauflinie I_{WV} ausgerichteten Querschnitt betrachtet (vergl. Lage der Schnittlinie III-III und IV-IV in Fig. 2 sowie Wellenverlauflinie I_{WV} in Fig. 6), bogenförmig und erstrecket sich, in Erstreckungsrichtung des Einschnittes 9 betrachtet, zumindest über den Großteil jedes Einschnittunterabschnittes 9aᵢ, 9aₐ (Fig. 6). Die Einschnittzone 9a' ist durch einen an der von der einlaufenden Einschnittkante 10a ausgehenden Einschnittwand 12a ausgebildeten Vorsprung 15 (Fig. 3, Fig. 4: Basis des Vorsprunges 15 strichliert angedeutet) und einer in der von der auslaufenden Einschnittkante 10b ausgehenden Einschnittwand 12b mit dem Vorsprung 15 korrespondierenden Einbuchtung 16 (vergl. Fig. 5) gebildet. Die Einbuchtung 16 ragt gegenüber dem im Bereich außerhalb der mittleren Einschnittzone 9a' vorliegenden Niveau der Einschnittwand 12b in die Einschnittwand 12b hinein und der Vorsprung 15 ragt gegenüber den im Bereich außerhalb der mittleren Einschnittzone 9a' vorliegenden Niveau der Einschnittwand 12a von der Einschnittwand 12a ab.

Die Einschnittzone 9a' weist, im Querschnitt senkrecht zur Wellenverlauflinie I_{WV} betrachtet, eine auf die Einschnittmittelebene M_{E} bezogene und parallel zu dieser ermittelte Erstreckungslänge Iₐ' (Fig.3, Fig. 4) von 2,0 mm bis 5,0 mm, insbesondere von 2,5 mm bis 3,5 mm, auf. In der in Fig. 6 gezeigten Detailansicht ist sowohl die Wellenverlauflinie I_{WV} und eine in der Symmetrieebene E₂ verlaufende, zu den Einschnittwänden 12a, 12b übereinstimmend beabstandete Zonenmittellinie mz der Einschnittzone 9a' eingezeichnet ist. Der Verlauf der Zonenmittellinie mz wird nachfolgend unter Zuhilfenahme einer Bezugs-Wellenverlauflinie I_{WV}* erläutert. Die Bezugs-Wellenverlauflinie I_{WV}* ergibt sich durch Projektion der Wellenverlauflinie I_{WV} in die Symmetrieebene E₂, wobei die Projektion parallel zur Einschnittmittelebene M_{E} (Fig. 3, Fig. 4) sowie senkrecht zur Symmetrieebene E₂ (Fig. 3, Fig. 4) erfolgt. In Fig. 6 ist die Bezugs-Wellenverlauflinie I_{WV}* strichliert eingezeichnet, wobei die Bezugs-Wellenverlauflinie I_{WV}* in Draufsicht von der Wellenverlauflinie I_{WV} überlagert ist.

Die Zonenmittellinie mz weist mit der Bezugs-Wellenverlauflinie l_{WV}* zwei Schnittpunkte P₃ und am gegenseitigen Anschluss der Einschnittunterabschnitte 9aᵢ und 9aₐ eine gegenüber der und senkrecht zur Bezugs-Wellenverlauflinie I_{WV}* ermittelte maximale Auslenkung aₘₐₓ von 150% bis 200%, insbesondere von 160% bis 190%, der Breite b_{E} des Einschnittes 9 auf, wobei die gegenüber der und senkrecht zur Bezugs-Wellenverlauflinie I_{WV}* ermittelte Auslenkung der Zonenmittellinie mz von der Stelle der maximale Auslenkung aₘₐₓ zu den Schnittpunkten P₃ stetig (sprungfrei) abnimmt. Ferner weist die Zonenmittellinie mz in der Symmetrieebene E₂ an der Stelle der erwähnten Amplitude Aᵢ eine gegenüber der und senkrecht zur Bezugs-Wellenverlauflinie I_{WV}* ermittelte Auslenkung aᵢ von 50% bis 80%, insbesondere von 60% bis 70%, der maximale Auslenkung aₘₐₓ auf. Außerdem weist die Zonenmittellinie mz in der Symmetrieebene E₂ an der Stelle der erwähnten Amplitude Aₐ eine gegenüber der und senkrecht zur Bezugs-Wellenverlauflinie I_{WV}* ermittelte Auslenkung aₐ von 50% bis 100%, insbesondere von 60% bis 70%, der maximale Auslenkung aₘₐₓ auf. Die Auslenkung aᵢ und die Auslenkung aₐ sind bevorzugter Weise ferner derart aufeinander abgestimmt, dass die Auslenkung aᵢ 90% bis 110% der Auslenkung aₐ beträgt. Der Ausdruck "senkrecht zur Bezugs-Wellenverlauflinie I_{WV}*" bezeichnet eine senkrechte Ausrichtung bezüglich einer an den jeweiligen Punkt der Bezugs-Wellenverlauflinie I_{WV}* angelegten Tangente.

Gemäß Fig. 5 ist beim gezeigten Ausführungsbeispiel im zentralen Einschnittabschnitt 9b und in jedem randseitigen Einschnittabschnitt 9c jeweils eine lokale Grundanhebung 17 ausgebildet, welche vorzugsweise in bekannter Weise ausgeführt ist und dem Einschnitt 9 lokal eine geringere Tiefe verleiht. In den Bereichen außerhalb der Grundanhebung 17 ist der Einschnitt 9 vorzugsweise auf die erwähnte maximale Tiefe t_{E} (Fig. 3, Fig. 4) ausgeführt.

Die Erfindung ist auf das beschriebene Ausführungsbeispiel nicht beschränkt.

Der Laufstreifen kann eine von der beschriebenen Profilierung abweichende laufrichtungsgebunden ausgeführte Profilierung aufweisen, sodass beispielsweise V-förmig über die Laufstreifenbreite verlaufende, auf Profiltiefe ausgeführten Schrägrillen, welche im Bereich der Reifenäquatorialebene ineinander einmünden und über den jeweiligen seitlichen Rand der Bodenaufstandsfläche hinausverlaufen, in Kombination mit zwischen den Schrägrillen verlaufenden Kurzrillen vorgesehen sein können. Zu den die jeweiligen Profilpositiven (umlaufende Profilrippen, Profilblöcke) begrenzenden Rillen gehören vorzugsweise jeweils auf Profiltiefe ausgeführte Rillen. Die Einschnitte können in in Umfangsrichtung umlaufenden Profilrippen, welche insbesondere frei von Querrillen oder lediglich mit sacknutartig innerhalb der Profilrippe endenden Querrillen versehen sind, ausgebildet sein. Die Einschnitte verlaufen in Draufsicht zur axialen Richtung unter einem Winkel von 5° bis 50° und können insgesamt bogenförmig, also durchgehend gebogen, verlaufen, sodass sie bogenförmig verlaufende Einschnittmittellinien m_{E} aufweisen. Bei bogenförmig verlaufenden Einschnitten bezieht sich deren relativ zur axialen Richtung ermittelte Winkel auf eine in Draufsicht die Enden der bogenförmig verlaufenden Einschnittmittellinie m_{E} verbindende gerade Linie. Die ausgelenkte mittlere Einschnittzone ist optional. Außerdem kann der Laufstreifen bezüglich der Reifenäquatorialebene asymmetrische ausgeführt sein

### Bezugszeichenliste

- 1: mittlere Profilblockreihe
- 2: schulterseitige Profilblockreihe
- 3: zentrale Umfangsrille
- 4: schulterseitige Umfangsrille
- 5: mittlerer Profilblock
- 5a: einlaufende Blockkante
- 5b: auslaufende Blockkante
- 5c: Blockaußenfläche
- 6: schulterseitige Profilblock
- 6a: einlaufende Blockkante
- 6b: auslaufende Blockkante
- 6c: Blockaußenfläche
- 7: mittlere Querrille
- 8: schulterseitige Querrille
- 9: Einschnitt
- 9: Einschnitthälfte
- 9a: Einschnittabschnitt
- 9aₐ, 9aᵢ: Einschnittunterabschnitt
- 9aᵣₐ: radial äußerer Einschnittbereich
- 9aᵣᵢ: radial innerer Einschnittbereich
- 9a: mittlere Einschnittzone
- 9b: zentraler Einschnittabschnitt
- 9c: randseitiger Einschnittabschnitt
- 10a: einlaufende Einschnittkante
- 10b: auslaufende Einschnittkante
- 11a: einlaufendes Einschnittende
- 11b: auslaufendes Einschnittende
- 12a: Einschnittwand
- 12b: Einschnittwand
- 12c: Einschnittgrund
- 13: Vorsprung
- 14: Vertiefung
- 15: Vorsprung
- 16: Einbuchtung
- 17: Grundanhebung
- a₁: Abstand
- aₐ, aᵢ: Auslenkung
- aₘₐₓ: maximale Auslenkung
- Aₐ, Aᵢ: Amplitude
- A-A: Linie (Reifenäquatorialebene)
- b_{E}: Breite
- E₁: Querschnittmittelebene
- E₂: Symmetrieebene
- I: Linie (seitlicher Rand der Bodenaufstandsfläche)
- Iₐ, Iₐ', I_{b}, I_{E}: Länge
- I_{WV}: Wellenverlauflinie
- I_{WV}: Bezugs-Wellenverlauflinie
- m_{E}: Einschnittmittellinie
- m_{E,i}, m_{E,a}: Einschnittmittellinienabschnitt
- m_{QR}: Rillenmittellinie
- m_{Z}: Zonenmittellinie
- M_{E}: Einschnittmittelebene
- P₁, P₂: Punkte
- P₃: Schnittpunkt
- R: Pfeil (Abrollrichtung)
- t₂, tᵣₐ: Tiefe
- t_{E}: maximale Tiefe
- U: Doppelpfeil (Umfangsrichtung)
- Z₂, Z₆: Detail
- α, β: Winkel
- λₐ, λᵢ: Wellenlänge

## Patentansprüche

1. Fahrzeugluftreifen mit einem laufrichtungsgebunden ausgeführten Laufstreifen mit durch Rillen (3, 4) begrenzten Profilpositiven (5, 6) mit zur axialen Richtung unter einem Winkel von 5° bis 50° verlaufenden Einschnitten (9), welche jeweils eine Breite (b_{E}) von 0,4 mm bis 2,0 mm, eine maximale Tiefe (t_{E}) von zumindest 70% der Profiltiefe, ein beim Abrollen des Reifens bei Vorwärtsfahrt (Pfeil R) zuerst in den Untergrund eintretendes, laufstreifeninnenseitiges, einlaufendes Einschnittende (11a) und ein laufstreifenaußenseitiges, auslaufendes Einschnittende (11b), eine beim Abrollen des Reifens bei Vorwärtsfahrt (Pfeil R) zuerst in den Untergrund eintretende, einlaufende Einschnittkante (10a) und eine auslaufende Einschnittkante (10b) sowie ferner zumindest einen in Draufsicht gewellt verlaufenden Einschnittabschnitt (9a) aufweisen, wobei sich der gewellt verlaufende Einschnittabschnitt (9a) aus jeweils über eine halbe Wellenlänge ((λᵢ/2), (λₐ/2)) verlaufenden Einschnittunterabschnitten (9aₐ, 9aᵢ) mit jeweils einer Amplitude (Aᵢ, Aₐ) zusammensetzt und wobei entweder die Amplituden (Aᵢ, Aₐ) übereinstimmen oder die größte(n) Amplitude(n) (Aᵢ, Aₐ) um bis zu 10% größer ist bzw. sind als die kleinste(n) Amplitude(n) (Aᵢ, Aₐ),
**dadurch gekennzeichnet,**
**dass** die Einschnitte (9) die Profilpositive (5, 6) durchqueren, wobei der gewellt verlaufende Einschnittabschnitt (9a) in Draufsicht S-förmig gewellt verläuft und sich aus einem über eine erste halbe Wellenlänge (λᵢ/2) verlaufenden, gegen die Abrollrichtung (R) bei Vorwärtsfahrt weisenden, laufstreifeninnenseitigen Einschnittunterabschnitt (9aᵢ) und einem über einer zweite halbe Wellenlänge (λₐ/2) verlaufenden, in die Abrollrichtung (R) bei Vorwärtsfahrt weisenden, laufstreifenaußenseitigen Einschnittunterabschnitt (9aₐ) zusammensetzt, wobei die zweite Wellenlänge (λₐ) größer ist als die erste Wellenlänge (λᵢ).

2. Fahrzeugluftreifen nach Anspruch 1, **dadurch gekennzeichnet, dass** die zum laufstreifenaußenseitigen Einschnittunterabschnitt (9aₐ) gehörende zweite Wellenlänge (λₐ) 110% bis 140%, insbesondere 115% bis 125%, der zum laufstreifeninnenseitigen Einschnittunterabschnitt (9aᵢ) gehörenden ersten Wellenlänge (λᵢ) beträgt.

3. Fahrzeugluftreifen nach Anspruch 1 oder 2, **dadurch gekennzeichnet, dass** die zum laufstreifeninnenseitigen Einschnittunterabschnitt (9aᵢ) gehörende erste halbe Wellenlänge (λᵢ/2) eine Größe von 4,0 mm bis 10,0 mm, bevorzugt von 6,0 mm bis 8,0 mm, aufweist.

4. Fahrzeugluftreifen nach einem der Ansprüche 1 bis 3, **dadurch gekennzeichnet, dass** der laufstreifeninnenseitige Einschnittunterabschnitt (9aᵢ) und der laufstreifenaußenseitige Einschnittunterabschnitt (9aₐ) jeweils eine Amplitude (Aᵢ, Aₐ) von 100% bis 300%, insbesondere von bis zu 200%, bevorzugt von 125% bis 175%, besonders bevorzugt von 140% bis 160%, der Breite (b_{E}) des Einschnittes (9) aufweisen.

5. Fahrzeugluftreifen nach einem der Ansprüche 1 bis 4, **dadurch gekennzeichnet, dass** der in Draufsicht S-förmig gewellt verlaufende Einschnittabschnitt (9a) - in Draufsicht betrachtet und bezogen auf die in Erstreckungsrichtung ausgerichtete Einschnittmittellinie (m_{E}) - eine an der Laufstreifenperipherie ermittelte, in die axiale Richtung projizierte Länge (Iₐ) von 20% bis 30%, insbesondere von 24% bis 28%, der auf analoge Weise ermittelten Länge (I_{E}) des Einschnittes (9) aufweist.

6. Fahrzeugluftreifen nach einem der Ansprüche 1 bis 5, **dadurch gekennzeichnet, dass** der in Draufsicht S-förmig gewellt verlaufende Einschnittabschnitt (9a), im in Draufsicht senkrecht zur Einschnittmittellinie (m_{E}) ausgerichtete Querschnitt betrachtet, einen radial äußeren Einschnittbereich (9aᵣₐ) aufweist, in welchem die S-Form fortgeführt ist und welcher in radialer Richtung bis in eine Tiefe (tᵣₐ) von 35% bis 60%, insbesondere von 45% bis 50%, der maximalen Tiefe (t_{E}) des Einschnittes (9) reicht.

7. Fahrzeugluftreifen nach einem der Ansprüche 1 bis 6, **dadurch gekennzeichnet, dass** Einschnitte (9) vorgesehen sind, welche jeweils zumindest zwei, insbesondere genau zwei, in Draufsicht S-förmig gewellt verlaufende Einschnittabschnitte (9a) aufweisen, wobei die in Draufsicht S-förmig gewellt verlaufenden Einschnittabschnitte (9a) vorzugsweise nicht unmittelbar aneinander anschließen.

8. Fahrzeugluftreifen nach Anspruch 7, **dadurch gekennzeichnet, dass** die Einschnitte (9) jeweils eine in Draufsicht senkrecht zur Einschnittmittellinie (m_{E}) ausgerichtete, bezogen auf die Längserstreckung durch die Mitte des jeweiligen Einschnittes (9) verlaufende Querschnittmittelebene (E₁) aufweisen, bezüglicher welcher die Einschnitte (9) schubsymmetrisch ausgebildet sind.

9. Fahrzeugluftreifen nach einem der Ansprüche 1 bis 8, **dadurch gekennzeichnet, dass** der bzw. jeder in Draufsicht S-förmig gewellt verlaufende Einschnittabschnitt (9a) eines Einschnittes (9), im in radialer Richtung ausgerichteten und senkrecht zur Einschnittmittellinie (m_{E}) verlaufenden Querschnitt betrachtet, eine sich über den Großteil jedes Einschnittunterabschnittes (9aᵢ, 9aₐ) erstreckende, ausgelenkte mittlere Einschnittzone (9a') aufweist, welche, im in Draufsicht senkrecht zu einer mittig durch den S-förmig gewellt verlaufenden Einschnittabschnitt (9a) verlaufenden Wellenverlauflinie (I_{WV}) ausgerichteten Querschnitt betrachtet, bogenförmig verläuft.

10. Fahrzeugluftreifen nach Anspruch 9, **dadurch gekennzeichnet, dass** die Einschnitte (9) von den Einschnittkanten (10a, 10b) ausgehende Einschnittwände (12a, 12b) aufweisen, wobei die ausgelenkte mittlere Einschnittzone (9a') durch einen an der von der einlaufenden Einschnittkante (10a) ausgehenden Einschnittwand (12a) ausgebildeten Vorsprung (15) und einer in der von der auslaufenden Einschnittkante (10b) ausgehenden Einschnittwand (12b) ausgebildeten Einbuchtung (16) gebildet ist.

11. Fahrzeugluftreifen nach Anspruch 9 oder 10, **dadurch gekennzeichnet, dass** die ausgelenkte mittlere Einschnittzone (9a') eine Symmetrieebene (E₂) aufweist, welche, im in radialer Richtung ausgerichteten Querschnitt senkrecht zur Einschnittmittellinie (m_{E}) betrachtet, eine von der Einschnittmittellinie (m_{E}) ausgehende Einschnittmittelebene (M_{E}) senkrecht in einer in radialer Richtung ermittelten Tiefe (t₂) von 50% bis 70%, insbesondere 55% bis 65%, der maximalen Tiefe (t_{E}) des Einschnittes (9) schneidet.

12. Fahrzeugluftreifen nach Anspruch 11, **dadurch gekennzeichnet, dass** die ausgelenkte mittlere Einschnittzone (9a') in der Symmetrieebene (E₂) eine Zonenmittellinie (mz) aufweist, welche am gegenseitigen Anschluss der Einschnittunterabschnitte (9aₐ, 9aᵢ) gegenüber und senkrecht zu einer Bezugs-Wellenverlauflinie (I_{WV}*), die sich durch Projektion der Wellenverlauflinie (I_{WV}) im Bereich außerhalb der ausgelenkten mittleren Einschnittzone (9a') in die Symmetrieebene (E₂) ergibt, eine maximale Auslenkung (aₘₐₓ) von 150% bis 200%, insbesondere von 160% bis 190%, der Breite (b_{E}) des Einschnittes (9) aufweist, wobei die in der Symmetrieebene (E₂) gegenüber der und senkrecht zur Bezugs-Wellenverlauflinie (I_{WV}*) ermittelte Auslenkung der Zonenmittellinie (mz) von der Stelle der maximale Auslenkung (aₘₐₓ) zu den Schnittpunkten (P₃) der Zonenmittellinie (mz) mit der Bezugs-Wellenverlauflinie (I_{WV}*) abnimmt.

13. Fahrzeugluftreifen nach Anspruch 12, **dadurch gekennzeichnet, dass** die Zonenmittellinie (mz) an der Stelle der Amplitude (Aᵢ) des laufstreifeninnenseitigen Einschnittunterabschnittes (9aᵢ) und an der Stelle der Amplitude (Aₐ) des laufstreifenaußenseitigen Einschnittunterabschnittes (9aₐ) jeweils eine gegenüber der und senkrecht zur Bezugs-Wellenverlauflinie (I_{WV}*) ermittelte Auslenkung (aᵢ, aₐ) aufweist, welche 50% bis 100%, insbesondere 60% bis 70%, der maximalen Auslenkung (aₘₐₓ) beträgt.

14. Fahrzeugluftreifen nach Anspruch 13, **dadurch gekennzeichnet, dass** die Auslenkung (aᵢ) der Zonenmittellinie (mz) im laufstreifeninnenseitigen Einschnittunterabschnitt (9aᵢ) 90% bis 110% der Auslenkung (aₐ) der Zonenmittellinie (m_{Z}) im laufstreifenaußenseitigen Einschnittunterabschnitt (9aₐ) beträgt.

15. Fahrzeugluftreifen nach einem der Ansprüche 9 bis 14, **dadurch gekennzeichnet, dass** die ausgelenkte mittlere Einschnittzone (9a'), im Querschnitt senkrecht zur Wellenverlauflinie (Iwv) betrachtet, eine auf die von der Einschnittmittellinie (m_{E}) ausgehende Einschnittmittelebene (M_{E}) bezogene und parallel zu dieser ermittelte Erstreckungslänge (Iₐ') von 2,0 mm bis 5,0 mm, insbesondere von 2,5 mm bis 3,5 mm, aufweist.

## Claims

1. Pneumatic vehicle tyre with a directional tread having profile positives (5, 6) which are delimited by grooves (3, 4) and have sipes (9), which extend at an angle of 5° to 50° in relation to the axial direction and each have a width (b_{E}) of 0.4 to 2.0 mm, a maximum depth (t_{E}) of at least 70% of the profile depth, a leading sipe end (11a) on the inner side of the tread, arriving first at ground level when the tyre is rolling during forward travel (arrow R), and a trailing sipe end (11b) on the outer side of the tread, a leading sipe edge (10a), arriving first at ground level when the tyre is rolling during forward travel (arrow R), and a trailing sipe edge (10b) as well as also at least one sipe portion (9a) extending in the form of a wave in plan view, wherein the sipe portion (9a) extending in the form of a wave is made up of sipe subportions (9aₐ, 9aᵢ) respectively extending over a half wavelength ((λᵢ/2), (λₐ/2)) and each having an amplitude (Aᵢ, Aₐ) and wherein either the amplitudes (Aᵢ, Aₐ) match or the greatest amplitude(s) (Aᵢ, Aₐ) is or are greater by up to 10% than the smallest amplitude(s) (Aᵢ, Aₐ),
**characterized**
**in that** the sipes (9) cross the profile positives (5, 6), wherein the sipe portion (9a) extending in the form of a wave extends in the form of an S-shaped wave in plan view and is made up of a sipe subportion (9aᵢ) on the inner side of the tread, extending over a first half wavelength(λᵢ/2) and facing counter to the rolling direction (R) during forward travel, and a sipe subportion (9aₐ) on the outer side of the tread, extending over a second half wavelength(λₐ/2) and facing in the rolling direction (R) during forward travel, the second wavelength (λₐ) being greater than the first wavelength (λᵢ).

2. Pneumatic vehicle tyre according to Claim 1, **characterized in that** the second wavelength (λₐ), associated with the sipe subportion (9aₐ) on the outer side of the tread, is 110% to 140%, in particular 115% to 125%, of the first wavelength (λᵢ), associated with the sipe subportion (9aᵢ) on the inner side of the tread.

3. Pneumatic vehicle tyre according to Claim 1 or 2, **characterized in that** the first half wavelength (λᵢ/2), associated with the sipe subportion (9aᵢ) on the inner side of the tread, has a magnitude of 4.0 mm to 10.0 mm, preferably of 6.0 mm to 8.0 mm.

4. Pneumatic vehicle tyre according to one of Claims 1 to 3, **characterized in that** the sipe subportion (9aᵢ) on the inner side of the tread and the sipe subportion (9aₐ) on the outer side of the tread respectively have an amplitude (Aᵢ, Aₐ) of 100% to 300%, in particular of up to 200%, preferably of 125% to 175%, particularly preferably of 140% to 160%, of the width (b_{E}) of the sipe (9).

5. Pneumatic vehicle tyre according to one of Claims 1 to 4, **characterized in that** the sipe portion (9a) extending in the form of an S-shaped wave in plan view has - when considered in plan view and with respect to the sipe centreline (m_{E}) aligned in the direction of extent - a length (Iₐ) projected in the axial direction that is determined at the periphery of the tread of 20% to 30%, in particular of 24% to 28%, of the length (I_{E}) of the sipe (9) determined in an analogous way.

6. Pneumatic vehicle tyre according to one of Claims 1 to 5, **characterized in that** the sipe portion (9a) extending in the form of an S-shaped wave in plan view has, when considered in the cross section which in plan view is aligned perpendicularly to the sipe centreline (m_{E}), a radially outer sipe region (9aᵣₐ), in which the S shape is continued and which reaches in the radial direction to a depth (tᵣₐ) of 35% to 60%, in particular of 45% to 50%, of the maximum depth (t_{E}) of the sipe (9).

7. Pneumatic vehicle tyre according to one of Claims 1 to 6, **characterized in that** sipes (9) which respectively have at least two, in particular precisely two, sipe portions (9a) extending in the form of an S-shaped wave in plan view are provided, wherein the sipe portions (9a) extending in the form of an S-shaped wave in plan view preferably do not directly adjoin one another.

8. Pneumatic vehicle tyre according to Claim 7, **characterized in that** the sipes (9) respectively have a cross-sectional centre plane (E₁) which in plan view is aligned perpendicularly to the sipe centreline (m_{E}), extends through the middle of the respective sipe (9) with respect to the longitudinal extent and with respect to which the sipes (9) are formed shear-symmetrically.

9. Pneumatic vehicle tyre according to one of Claims 1 to 8, **characterized in that** the or each sipe portion (9a), extending in the form of an S-shaped wave in plan view, of a sipe (9) has, when considered in the cross section aligned in the radial direction and extending perpendicularly to the sipe centreline (m_{E}), a deflected central sipe zone (9a'), which extends over the large part of each sipe subportion (9aᵢ, 9aₐ) and, when considered in the cross section which in plan view is aligned perpendicularly to a wave profile line (Iwv) extending centrally through the sipe portion (9a) extending in the form of an S-shaped wave, extends in the form of an arc.

10. Pneumatic vehicle tyre according to Claim 9, **characterized in that** the sipes (9) have sipe walls (12a, 12b) extending from the sipe edges (10a, 10b), wherein the deflected central sipe zone (9a') is formed by a projection (15), formed on the sipe wall (12a) extending from the leading sipe edge (10a), and an indentation (16), formed in the sipe wall (12b) extending from the trailing sipe edge (10b).

11. Pneumatic vehicle tyre according to Claim 9 or 10, **characterized in that** the deflected central sipe zone (9a') has a plane of symmetry (E₂), which, when considered perpendicularly to the sipe centreline (m_{E}) in the cross section aligned in the radial direction, intersects a sipe centre plane (M_{E}), extending from the sipe centreline (m_{E}), perpendicularly at a depth (t₂), determined in the radial direction, of 50% to 70%, in particular 55% to 65%, of the maximum depth (t_{E}) of the sipe (9).

12. Pneumatic vehicle tyre according to Claim 11, **characterized in that** the deflected central sipe zone (9a') has in the plane of symmetry (E₂) a zone centreline (m_{Z}) which, at the point where the sipe subportions (9aₐ, 9aᵢ) join one another, has with respect to and perpendicular to a reference wave profile line (Iwv*) which is obtained by projection of the wave profile line (Iwv) in the region outside the deflected central sipe zone (9a') into the plane of symmetry (E₂) a maximum deflection (aₘₐₓ) of 150% to 200%, in particular of 160% to 190%, of the width (b_{E}) of the sipe (9), wherein the deflection of the zone centreline (mz), determined in the plane of symmetry (E₂) with respect to and perpendicular to the reference wave profile line (Iwv*), decreases from the point of maximum deflection (aₘₐₓ) to the points of intersection (P₃) of the zone centreline (mz) with the reference wave profile line (Iwv*).

13. Pneumatic vehicle tyre according to Claim 12, **characterized in that**, at the point of the amplitude (Aᵢ) of the sipe subportion (9aᵢ) on the inner side of the tread and at the point of the amplitude (Aₐ) of the sipe subportion (9aₐ) on the outer side of the tread, the zone centreline (m_{Z}) respectively has a deflection (aᵢ, aₐ), determined with respect to and perpendicular to the reference wave profile line (Iwv*), which is 50% to 100%, in particular 60% to 70%, of the maximum deflection (amax).

14. Pneumatic vehicle tyre according to Claim 13, **characterized in that** the deflection (aᵢ) of the zone centreline (mz) in the sipe subportion (9aᵢ) on the inner side of the tread is 90% to 110% of the deflection (aₐ) of the zone centreline (m_{Z}) in the sipe subportion (9aₐ) on the outer side of the tread.

15. Pneumatic vehicle tyre according to one of Claims 9 to 14, **characterized in that** the deflected central sipe zone (9a') has, when considered in the cross section perpendicular to the wave profile line (I_{WV}), a length of extent (Iₐ') with reference to the sipe centre plane (M_{E}) extending from the sipe centreline (m_{E}) and determined parallel to said plane, of 2.0 mm to 5.0 mm, in particular of 2.5 mm to 3.5 mm.

## Revendications

1. Pneumatique de véhicule comprenant une bande de roulement directionnelle présentant des éléments en relief (5, 6) qui sont délimités par des rainures (3, 4) et comportent des lamelles (9) qui s'étendent selon un angle de 5° à 50° par rapport à la direction axiale et ont chacune une largeur (b_{E}) de 0,4 à 2,0 mm, une profondeur maximale (t_{E}) d'au moins 70 % de la profondeur de la bande de roulement, une extrémité de lamelle de bande de roulement intérieure entrante (11a) qui arrive au niveau du sol en premier lorsque le pneu roule pendant le déplacement vers l'avant (flèche R) et une extrémité de lamelle de bande de roulement extérieure sortante (11b), un bord de lamelle entrant (10a) qui arrive au niveau du sol en premier lorsque le pneu roule pendant le déplacement vers l'avant (flèche R) et un bord de lamelle sortant (10b) ainsi qu'au moins une partie de lamelle (9a) ayant une extension ondulée en vue de dessus, la partie de lamelle (9a) ayant une extension ondulée étant composée de parties inférieures de lamelle (9aₐ, 9aᵢ) s'étendant chacune sur une demi-longueur d'onde ((λᵢ/2), (λₐ/2)) et ayant chacune une amplitude (Aᵢ, Aₐ), et soit les amplitudes (Aᵢ, Aₐ) correspondent, soit la ou les plus grandes amplitudes (Aᵢ, Aₐ) est/sont jusqu'à 10 % plus grande(s) que la ou les plus petites amplitudes (Aᵢ, Aₐ),
**caractérisé en ce que**
les lamelles (9) passent à travers les éléments en relief (5, 6), la partie de lamelle (9a) ayant une extension ondulée s'étendant dans un profil ondulé en forme de S en vue de dessus et étant composée d'une partie inférieure de lamelle de bande de roulement intérieure (9aᵢ) s'étendant sur une première demi-longueur d'onde (λᵢ/2) et pointant à l'opposé de la direction de roulement (R) pendant le déplacement vers l'avant, et d'une partie inférieure de lamelle de bande de roulement extérieure (9aₐ) s'étendant sur une seconde demi-longueur d'onde (λₐ/2) et pointant dans la direction de roulement (R) pendant le déplacement vers l'avant, la seconde longueur d'onde (λₐ) étant supérieure à la première longueur d'onde (λᵢ).

2. Pneumatique de véhicule selon la revendication 1, **caractérisé en ce que** la seconde longueur d'onde (λₐ) qui appartient à la partie inférieure de lamelle de bande de roulement extérieure (9aₐ) est de 110 % à 140 %, en particulier de 115 % à 125 %, de la première longueur d'onde (λᵢ) qui appartient à la partie inférieure de lamelle de bande de roulement intérieure (9aᵢ).

3. Pneumatique de véhicule selon la revendication 1 ou 2, **caractérisé en ce que** la première demi-longueur d'onde (λᵢ/2) qui appartient à la partie inférieure de lamelle de bande de roulement intérieure (9aᵢ) a une taille de 4,0 mm à 10,0 mm, de préférence de 6,0 mm à 8,0 mm.

4. Pneumatique de véhicule selon l'une des revendications 1 à 3, **caractérisé en ce que** la partie inférieure de lamelle de bande de roulement intérieure (9aᵢ) et la partie inférieure de lamelle de bande de roulement extérieure (9aₐ) présentent respectivement une amplitude (Aᵢ, Aₐ) de 100 % à 300 %, en particulier jusqu'à 200 %, de préférence de 125 % à 175 %, de manière particulièrement de préférée de 140 % à 160 %, de la largeur (b_{E}) de la lamelle (9).

5. Pneumatique de véhicule selon l'une des revendications 1 à 4, **caractérisé en ce que** la partie de lamelle (9a) qui a une extension ondulée en forme de S en vue de dessus présente - dans une vue de dessus et par rapport à l'axe médian de lamelle (m_{E}) orienté dans le sens de l'extension - une longueur (Iₐ) de 20 % à 30 %, en particulier de 24 % à 28 %, projetée dans le sens axial et déterminée sur la périphérie de la bande de roulement, par rapport à la longueur (I_{E}) de la lamelle (9) déterminée de manière analogue.

6. Pneumatique de véhicule selon l'une des revendications 1 à 5, **caractérisé en ce que** la partie de lamelle (9a) qui a une extension ondulée en forme de S en vue de dessus, considérée dans une coupe transversale orientée perpendiculairement à l'axe médian de lamelle (m_{E}) en vue de dessus, présente une zone de lamelle extérieure radiale (9aᵣₐ) dans laquelle la forme en S se poursuit et qui s'étend dans le sens radial jusqu'à une profondeur (tᵣₐ) de 35 % à 60 %, en particulier de 45 % à 50 %, de la profondeur maximale (t_{E}) de la lamelle (9).

7. Pneumatique de véhicule selon l'une des revendications 1 à 6, **caractérisé en ce qu'**il est prévu des lamelles (9) qui comportent chacune au moins deux, en particulier exactement deux, parties lamelles (9a) ayant une extension ondulée en forme de S en vue de dessus, les parties lamelles (9a) ayant une extension ondulée en forme de S en vue de dessus ne se raccordant de préférence pas directement l'une à l'autre.

8. Pneumatique de véhicule selon la revendication 7, **caractérisé en ce que** les lamelles (9) présentent chacune un plan médian de coupe transversale (E₁) en vue de dessus orienté perpendiculairement à l'axe médian de lamelle (m_{E}) et s'étendant à travers le milieu de la lamelle (9) respective par rapport à l'extension longitudinale, plan par rapport auquel les lamelles (9) sont formées de manière symétrique par translation.

9. Pneumatique de véhicule selon l'une des revendications 1 à 8, **caractérisé en ce que** la ou chaque partie de lamelle (9a) d'une lamelle (9) ayant une extension ondulée en forme de S en vue de dessus, considérée dans une coupe transversale orientée dans le sens radial et s'étendant perpendiculairement à l'axe médian de lamelle (m_{E}), présente une zone de lamelle moyenne déviée (9a') s'étendant sur la majeure partie de chaque partie inférieure de lamelle (9aᵢ, 9aₐ), laquelle, considérée dans une coupe transversale orientée en vue de dessus perpendiculairement à une ligne de profil ondulée (Iwv) s'étendant au centre à travers la partie de lamelle (9a) ayant une extension ondulée en forme de S, s'étend en forme d'arc.

10. Pneumatique de véhicule selon la revendication 9, **caractérisé en ce que** les lamelles (9) présentent des parois de lamelle (12a, 12b) qui partent des bords de lamelle (10a, 10b), la zone de lamelle moyenne déviée (9a') étant formée par un bossage (15) réalisé sur la paroi de lamelle (12a) qui part du bord de lamelle entrant (10a), et un creux (16) réalisé dans la paroi de lamelle (12b) qui part du bord de lamelle sortant (10b).

11. Pneumatique de véhicule selon la revendication 9 ou 10, **caractérisé en ce que** la zone de lamelle moyenne déviée (9a') présente un plan de symétrie (E₂), lequel, considéré dans une coupe transversale orientée dans le sens radial et perpendiculairement à l'axe médian de lamelle (m_{E}), coupe perpendiculairement un plan médian de lamelle (M_{E}) partant de l'axe médian de lamelle (m_{E}) à une profondeur (t₂), déterminée dans le sens radial, de 50 % à 70 %, en particulier de 55 % à 65 %, de la profondeur maximale (t_{E}) de la lamelle (9).

12. Pneumatique de véhicule selon la revendication 11, **caractérisé en ce que** la zone de lamelle moyenne déviée (9a') présente, dans le plan de symétrie (E₂), un axe médian de zone (mz), lequel, au niveau du raccordement mutuel des parties inférieures de lamelle (9aₐ, 9aᵢ) par rapport et perpendiculairement à une ligne de profil ondulée de référence (Iwv*) qui résulte de la projection de la ligne de profil ondulée (Iwv) dans la zone extérieure à la zone de lamelle moyenne déviée (9a') dans le plan de symétrie (E₂), présente une déviation maximale (aₘₐₓ) de 150 % à 200 %, en particulier de 160 % à 190 %, de la largeur (b_{E}) de la lamelle (9), la déviation de l'axe médian de zone (mz), déterminée dans le plan de symétrie (E₂) par rapport et perpendiculairement à la ligne de profil ondulée de référence (Iwv*), diminuant de l'emplacement de la déviation maximale (aₘₐₓ) jusqu'aux points d'intersection (P₃) de l'axe médian de zone (mz) avec la ligne de profil ondulée de référence (Iwv*).

13. Pneumatique de véhicule selon la revendication 12, **caractérisé en ce que** l'axe médian de zone (mz), à l'emplacement de l'amplitude (Aᵢ) de la partie inférieure de lamelle de bande de roulement intérieure (9aᵢ) et à l'emplacement de l'amplitude (Aₐ) de la partie inférieure de lamelle de bande de roulement extérieure (9aₐ), présente respectivement une déviation (aᵢ, aₐ) déterminée par rapport et perpendiculairement à la ligne de profil ondulée de référence (Iwv*), qui est de 50 % à 100 %, en particulier de 60 % à 70 %, de la déviation maximale (aₘₐₓ).

14. Pneumatique de véhicule selon la revendication 13, **caractérisé en ce que** la déviation (aᵢ) de l'axe médian de zone (mz) dans la partie inférieure de lamelle de bande de roulement intérieure (9aᵢ) est de 90 % à 110 % de la déviation (aₐ) de l'axe médian de zone (mz) dans la partie inférieure de lamelle de bande de roulement extérieure (9aₐ).

15. Pneumatique de véhicule selon l'une des revendications 9 à 14, **caractérisé en ce que** la zone de lamelle moyenne déviée (9a'), considérée dans une coupe transversale perpendiculaire à la ligne de profil ondulée (IWV), présente une longueur d'extension (Iₐ') de 2,0 mm à 5,0 mm, en particulier de 2,5 mm à 3,5 mm, déterminée par rapport et parallèlement au plan médian de lamelle (M_{E}) partant de l'axe médian de lamelle (m_{E}).
